# EUROPEAN PATENT SPECIFICATION

(11) **EP 2 639 398 B1**
(45) Date of publication and mention of the grant of the patent: **16.11.2016**
(21) Application number: 12159693.6
(22) Date of filing: 15.03.2012
(51) Int. Cl.: E06B 9/88, F16H 35/00

(54) **End-of-travel device for a roller blind**
Anschlagvorrichtung für Rollläden
Dispositif de fin de course pour volet roulant

(43) Date of publication of application: 18.09.2013
(73) Proprietor: MOTTURA S.p.A., 10090 San Giusto Canavese (Torino) (IT)
(72) Inventor: Sartore, Caludia, I-10090 S. Giusto Canavese (Torino) (IT)
(74) Representative: Frontoni, Stefano

(56) References cited:
- DE-A1- 2 015 631
- DE-A1- 2 227 052
- DE-U- 1 970 316

## Description

The present invention relates to an end-of-travel device, in particular for roller blinds, of the type comprising:
- a wheel for input of motion, equipped with a single gear tooth or in any case with a toothed gear portion that extends along a circumference of the wheel for an arc of a circle that subtends an angle of less than 90°; and
- an end-of-travel wheel defining, along a circumference thereof, a toothed gear portion and an interference portion configured for causing arrest of the motion of rotation of the input wheel, after a preset number of revolutions of said input wheel.

A device of this type is for example known from DE2015631A.

It is known in the art to associate such a device to a system of actuation of a roller blind. In particular, the input wheel of the device is connected in rotation to the winding roller of the blind so as to turn therewith during its actuation until the end-of-travel wheel of the device determines arrest of the motion of rotation of the input wheel and hence also of the winding roller itself.

In said field of application, the end-of-travel device must enable a useful travel for complete unwinding and/or winding of the canvas of the blind on/from the winding roller, then leaving the user the possibility of adjusting the desired end of travel. In this connection, it is to be noted that in the known devices of the type referred to above the input wheel can perform up to approximately 20 revolutions, which corresponds approximately (this depending also upon the diameter of the winding roller itself) to the complete unwinding and/or winding of a canvas of approximately 3 m in length.

The object of the present invention is to provide an end-of-travel device of the type referred to above that can be used for roller blinds with canvases of a length greater than 3 m, preferably up to 6 m approximately, and that presents, however, at the same time contained overall dimensions.

The object referred to above is achieved via a device according to claim 1.

The claims form an integral part of the technical teaching provided herein in relation to the invention.

The invention will now be described, purely by way of non-limiting example, with reference to the annexed representations, in which:

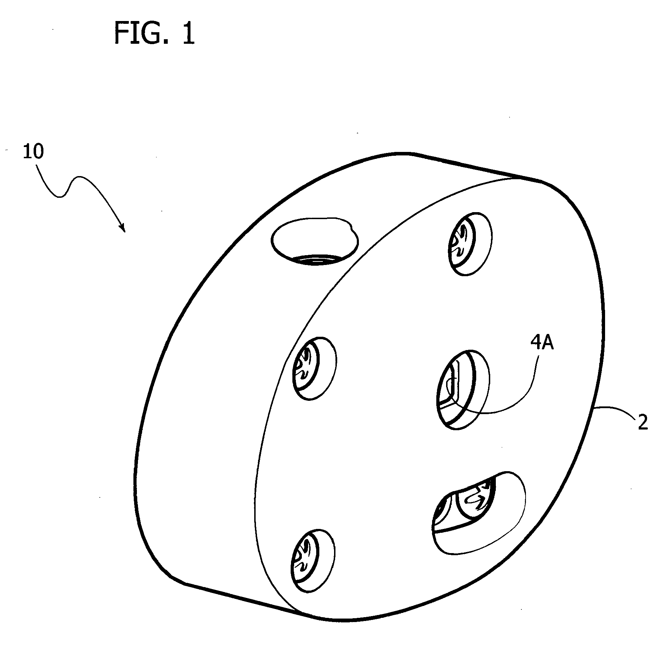

- Figure 1 is a schematic illustration of a perspective view of the device described herein;

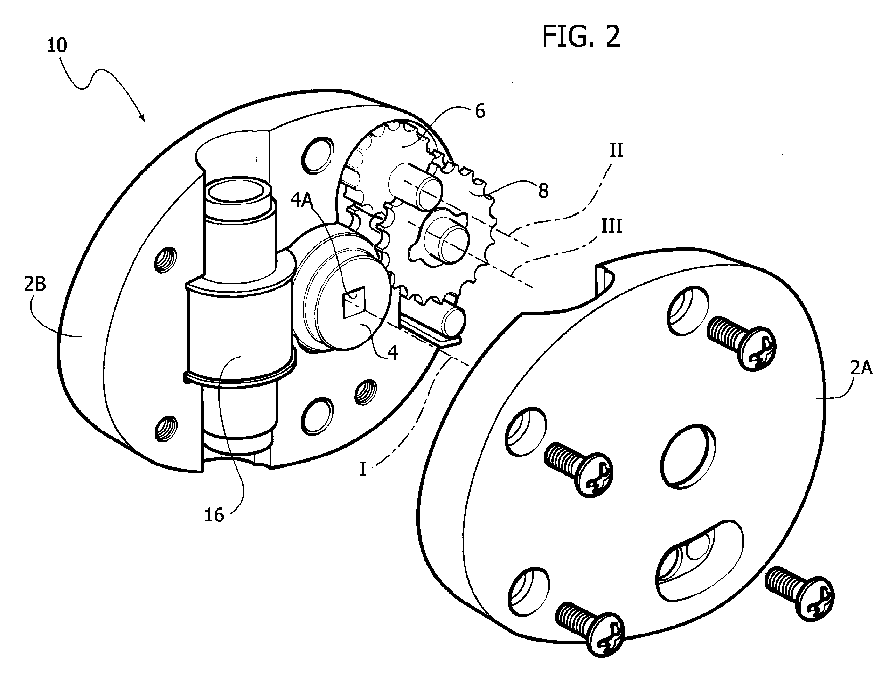

- Figure 2 is a partially exploded view of the device of Figure 1;
- Figure 3 is a perspective view of some components of the device of Figure 1;
- Figures 4A and 4B are two schematic views of the transmission means of the device, respectively in two steps of its operation, for each step there moreover being represented ad enlarged view of said means.

In the ensuing description, various specific details are illustrated aimed at an in-depth understanding of the embodiments. In other cases, known structures, materials, or operations are not illustrated or described in detail so that various aspects of the embodiment will not be obscured.

With reference to the figures, designated by the reference number 10 is an end-of-travel device, which is to be associated, in particular, to a system of actuation of the winding roller of a roller blind.

In general, said device comprises:
- an input wheel for input of motion, equipped with a single gear tooth or in any case with a toothed gear portion that extends along a circumference of the wheel, for an arc of a circle that subtends an angle of less than 90°; and
- an end-of-travel wheel defining, along a circumference thereof, a toothed gear portion and an interference portion designed to cause arrest of the movement of rotation of the input wheel, after a preset number of revolutions of said input wheel.

Illustrated in the figures is a preferred embodiment of the end-of-travel device described herein. In various embodiments, as in the one illustrated, the device 10 comprises a casing 2, set inside which are the means for transmission of motion of the device. The casing 2 is defined by two blocks 2A, 2B, which can be fitted together via screws, provided on the internal side of which are seats for housing the transmission means. The transmission means of the device are described hereinafter.

The input wheel 4 is rotatably mounted within the casing 2 so that it can turn about a first axis I. The wheel 4 has at the centre a cavity with polygonal cross section 4a (in the example illustrated, with square cross section), prearranged for receiving a pin having a corresponding cross section fixed in rotation to the winding roller of the blind, which is inserted within said cavity passing through an opening (not illustrated) provided in the corresponding position in the casing 2.

The end-of-travel wheel 6 is rotatably mounted within the casing about a second axis of rotation II parallel to the axis I.

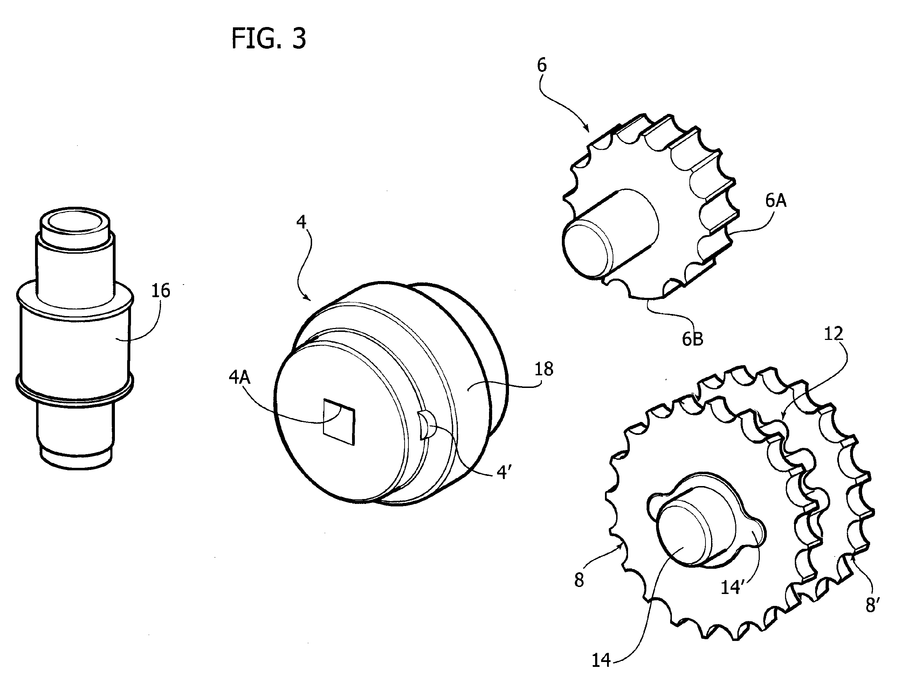

The input wheel 4 has a single gear tooth 4' (see Figure 3), or in any case a toothed gear portion that extends along a circumference of the wheel for an arc of a circle that subtends an angle of less than 90°. In this way, the wheel 4 is able to transmit to the kinematic chain downstream only a fraction of its motion of rotation. The end-of-travel wheel 6 defines, along a circumference thereof, a toothed gear portion 6a and an interference portion 6b. The interference portion 6b is defined by a surface raised with respect to an ideal toothed profile of continuation of the toothed profile of the portion 6a, said surface being such as to cause a condition of interference with a corresponding gear wheel upstream of the wheel 6. Said condition of interference causes arrest of rotation of said gear wheel, as likewise of the entire kinematic chain of the device, including also the wheel 4 when its tooth 4' meshes with the gear wheel downstream thereof. The latter condition identifies the end of travel of the winding roller.

The device described herein comprises a first gear wheel 8, configured for meshing with the input wheel 4, and a second gear wheel 12, configured for meshing with the end-of-travel wheel 6, and in that said first and second wheels 8 and 12 are coaxial and fixed together in rotation. The gear wheel 12 has dimensions such as to determine with the end-of-travel wheel 6 a transmission ratio greater than 1; in particular, the wheel 12 has a diameter (for example, the diameter of the primitive circumference of the wheel itself) smaller than the corresponding diameter of the end-of-travel wheel 6. Said configuration enables increase of the global transmission ratio of the device (defined by the product of the transmission ratio of the wheels 2 and 8 and of the transmission ratio of the wheels 12 and 6), and hence increase of the total number of revolutions of the input wheel 4 before arrest thereof is brought about as a result of intervention of the interference portion of the wheel 6. In particular, said configuration enables the input wheel 4 to perform a maximum number of revolutions decidedly greater than devices of a conventional type, for example up to 30 revolutions, without any need to increase the dimensions of the gear wheels i.e., the overall dimensions of the device itself. Thanks to the aforesaid characteristics, the device described herein can hence be prearranged for being used also in applications in which the canvas of the blind reaches even 6 m or more in length.

The wheels 8 and 12 are mounted in the casing 2 rotatably about a third axis of rotation III, parallel to the axes I and II. In various embodiments, as in the one illustrated, the wheel 8 is rotatable in a plane orthogonal to the axes I, II, III, in which plane also the gear tooth 4' of the wheel 4 lies. In a similar way, the wheel 12 is rotatable in a plane that is orthogonal to the axes I, II, III and parallel to the plane referred to above, and in which also the gear and interference portions 6a, 6b of the wheel 6 lie.The wheel 12 is defined by a body 14 that identifies at the centre the wheel 12, and has, on at least one side of said wheel, a shaped profile 14' on which the wheel 8 is fitted, the profile connecting the wheel 8 in rotation with the wheel 12.The device comprises a further gear wheel 8' having the same function as the wheel 8. The wheel 8' is fitted on a second shaped profile of the body 14, which, with respect to the wheel 12, is opposite to the profile 14' referred to above. The wheel 8' engages a further gear tooth of the wheel 2 (not illustrated), which lies in a plane orthogonal to the axis I, in which also the gear wheel 8' lies. Said configuration with the two wheels 8 and 8' has the purpose of reducing the stresses that are generated in the individual wheels.

The device moreover comprises a wormscrew 16 that engages a helical gear portion 18, provided on the input wheel 4 itself. The wormscrew 16 has at the bottom a portion for coupling in rotation the screw with a control member operable by a user, such as for example a control rod of the roller blind. Preferably, the screw 16 and the helical gear portion 18 are such as to form a system of transmission of motion of an irreversible type. In view of the foregoing, the screw 16 and the wheel 4 thus constitute the means of actuation of the winding roller. In this case, the device 10 hence functions both as control device and as end-of-travel device of the winding roller.

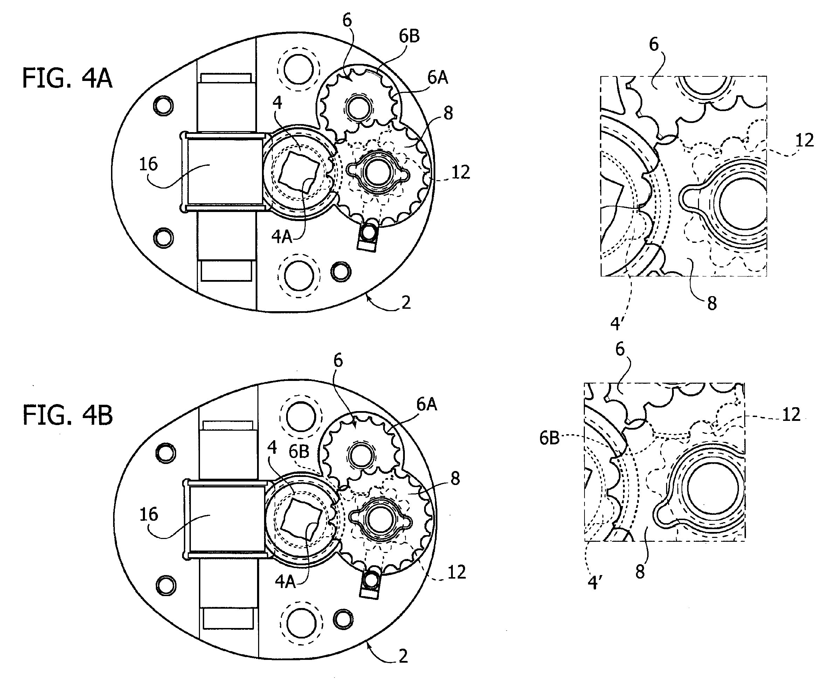

Figures 4a and 4b illustrate two successive steps of operation of the device described herein. The winding roller of the blind is driven in rotation by the wheel 4, which is in turn governed by the wormscrew 16. When the tooth 4' of the wheel 4 comes into contact with the wheel 8 (see Figure 4a), and as long as said tooth is meshing with said wheel, the motion of rotation of the wheel 4 is transmitted also to the wheel 8. Rotation of said wheel causes rotation of the wheel 12 and hence rotation of the end-of-travel wheel 6. When the tooth of the wheel 4 no longer meshes with the wheel 8, the wheel 4 continues to turn, but its movement of rotation is no longer transmitted to the wheels 8, 12 and 6. Consequently, to each rotation of the wheel 4 there corresponds a fraction of turn of the wheel 6, which determines a small displacement of the interference portion 6b towards the region of meshing of the wheels 6 and 12.

When the interference portion 6b comes into contact with the wheel 12, there is created a condition of interference between the wheels 6 and 12 such as to stop rotation of all the wheels 6, 12 and 8. At this point, when the pin of the wheel 4 comes again to mesh with the wheel 8 (see Figure 4b), there is arrest also of the wheel 4, and hence of the winding roller connected thereto. Said condition corresponds to reaching of the point of end of travel of the device.

Of course, without prejudice to the principle of the invention, the details of construction and the embodiments may vary, even significantly, with respect to what has been illustrated herein purely by way of non-limiting example, without thereby departing from the scope of the invention, as defined by the annexed claims.

## Claims

1. An end-of-travel device, in particular for roller blinds, of the type comprising:
- an input wheel (4) for input of motion, comprising a single gear tooth or in any case a toothed gear portion that extends along a circumference of the wheel, for an arc of a circle that subtends an angle of less than 90°; and
- an end-of-travel wheel (6) defining, along a circumference thereof, a toothed gear portion and an interference portion configured for causing arrest of the motion of rotation of the input wheel (4) after a preset number of revolutions of said input wheel (4),
said device being **characterized in that** it comprises a first gear wheel (8), configured for meshing with said input wheel (4), and a second gear wheel (12), configured for meshing with said end-of-travel wheel (6), and **in that** said first and second wheels (8, 12) are coaxial and fixed together in rotation, for transmitting the motion of rotation of said input wheel (4) to said end-of-travel wheel (6).

2. The device according to Claim 1, wherein said second wheel (12) has dimensions such as to determine with said end-of-travel wheel (6) a transmission ratio greater than 1.

3. The device according to either of the preceding claims, comprising a casing (2), wherein said input wheel is rotatably mounted in said casing about a first axis of rotation (I), wherein said end-of-travel wheel is rotatably mounted in said casing about a second axis of rotation (II), parallel to and set at a distance from said first axis (I), and wherein said first and second wheels (8, 12) are rotatably mounted in said casing (2) about a third axis of rotation (III), parallel to and set at a distance from both of said first and second axes (I, II).

4. The device according to any one of the preceding claims, comprising a wormscrew (16) that engages a helical gear portion (18) fixed in rotation to said input wheel.

5. The device according to Claim 4, wherein said helical portion is provided on said input wheel (4).

6. The device according to any one of the preceding claims, wherein said interference portion (6b) is defined by a surface raised with respect to an ideal toothed profile of continuation of the toothed profile of said gear portion (6a).

## Patentansprüche

1. Anschlagvorrichtung, insbesondere für Rollos, von dem Typ, der umfasst:
ein Eingabe-Rad (4) zur Eingabe von Bewegung, das einen einzelnen Zahn oder in jedem Fall einen Zahnradabschnitt aufweist, der an einem Umfang des Rades über einen Kreisbogen verläuft, der einen Winkel von weniger als 90° einschließt; und
ein Anschlag-Rad (6), das an seinem Umfang einen Zahnradabschnitt sowie einen Eingriffsabschnitt aufweist, der so ausgeführt ist, dass er Unterbrechung von Drehbewegung des Eingabe-Rades (4) nach einer vorgegebenen Anzahl von Umdrehungen des Eingabe-Rades (4) bewirkt,
wobei die Vorrichtung **dadurch gekennzeichnet ist, dass** sie ein erstes Zahnrad (8), das zum Eingriff mit dem Eingabe-Rad (4) ausgeführt ist, sowie ein zweites Zahnrad (12) umfasst, das zum Eingriff mit dem Anschlag-Rad (6) ausgeführt ist und dadurch, dass das erste und das zweite Rad (8, 12) koaxial und zur gemeinsamen Drehung fixiert sind, um die Drehbewegung des Eingabe-Rades (4) auf das Anschlag-Rad (6) zu übertragen.

2. Vorrichtung nach Anspruch 1, wobei das zweite Rad (12) Abmessungen aufweist, durch die ein Übersetzungsverhältnis mit dem Anschlag-Rad (6) bestimmt wird, das größer ist als 1.

3. Vorrichtung nach einem der vorangehenden Ansprüche, die ein Gehäuse (2) umfasst, wobei das Eingabe-Rad um eine erste Drehachse (I) herum drehbar in dem Gehäuse angebracht ist, das Anschlag-Rad um eine zweite Drehachse (II) herum, die parallel zu der ersten Achse (I) und in einem Abstand dazu angeordnet ist, drehbar in dem Gehäuse angebracht ist, und wobei das erste und das zweite Rad (8, 12) um eine dritte Drehachse (III) herum, die parallel sowohl zu der ersten als auch der zweiten Achse (I, II) und in einem Abstand dazu angeordnet ist, drehbar in dem Gehäuse (2) angebracht sind.

4. Vorrichtung nach einem der vorangehenden Ansprüche, die eine Schneckenschraube (16) umfasst, die mit einem Schraubenradabschnitt (18) in Eingriff ist, der zur Drehung an dem Eingabe-Rad fixiert ist.

5. Vorrichtung nach Anspruch 4, wobei der Schraubenabschnitt an dem Eingabe-Rad (4) vorhanden ist.

6. Vorrichtung nach einem der vorangehenden Ansprüche, wobei der Eingriffsabschnitt (6b) durch eine Fläche gebildet wird, die in Bezug auf ein ideales Zahnprofil in Fortsetzung des Zahnprofils des Zahnradabschnitts (6a) erhaben ist.

## Revendications

1. Dispositif de fin de course, en particulier pour volets roulants, du type comprenant :
- une roue d'entrée (4) pour l'entrée de mouvement, comprenant une seule dent ou dans tous les cas, une partie de roue dentée qui s'étend le long d'une circonférence de la roue, sur un arc de cercle qui sous-tend un angle inférieur à 90° ; et
- une roue de fin de course (6) définissant, le long de sa circonférence, une partie de roue dentée et une partie d'interférence configurée pour provoquer l'arrêt du mouvement de la rotation de la roue d'entrée (4) après un nombre prédéterminé de révolutions de ladite roue d'entrée (4),
ledit dispositif étant **caractérisé en ce qu'**il comprend une première roue dentée (8), configurée pour s'engrener avec ladite roue d'entrée (4), et une seconde roue dentée (12) configurée pour s'engrener avec ladite roue de fin de course (6), et **en ce que** lesdites première et seconde roues (8, 12) sont coaxiales et fixées ensemble en rotation, pour transmettre le mouvement de rotation de ladite roue d'entrée (4) à ladite roue de fin de course (6).

2. Dispositif selon la revendication 1, dans lequel ladite seconde roue (12) a des dimensions afin de déterminer avec ladite roue de fin de course (6), un rapport de transmission supérieur à 1.

3. Dispositif selon l'une ou l'autre des revendications précédentes, comprenant un boîtier (2), dans lequel ladite roue d'entrée est montée de manière rotative dans ledit boîtier autour d'un premier axe de rotation (I), dans lequel ladite roue de fin de course est montée de manière rotative dans ledit boîtier autour d'un deuxième axe de rotation (II), parallèle à et placée à une distance dudit premier axe (I), et dans lequel lesdites première et seconde roues (8, 12) sont montées en rotation dans ledit boîtier (2) autour d'un troisième axe de rotation (III), parallèle à et placé à une distance des premier et deuxième axes (I, II).

4. Dispositif selon l'une quelconque des revendications précédentes, comprenant une vis sans fin (16) qui met en prise une partie d'engrenage hélicoïdale (18) fixée en rotation sur ladite roue d'entrée.

5. Dispositif selon la revendication 4, dans lequel ladite partie hélicoïdale est prévue sur ladite roue d'entrée (4) .

6. Dispositif selon l'une quelconque des revendications précédentes, dans lequel ladite partie d'inférence (6b) est définie par une surface relevée par rapport à un profil denté de continuation idéal de profil denté de ladite partie d'engrenage (6a).
